# DEMANDE DE BREVET EUROPEEN

(11) **EP 4 821 653 A1**
(43) Date de publication de la demande: **14.10.2026**
(21) Numéro de dépôt: 26171334.1
(22) Date de dépôt: 09.04.2026
(51) Int. Cl.: B29C 43/30, B29C 69/00, B29C 67/00

(54) **PROCEDE DE REALISATION D'UN ELEMENT D HABILLAGE UTILISANT UN FLANC DECOUPE ET ELEMENT D HABILLAGE ASSOCIE**

(30) Priorité: 09.04.2025 FR 2503777
(71) Demandeur: Faurecia Intérieur Industrie, 92000 Nanterre (FR)
(72) Inventeur: BEAU, Godefroy, 92250 LA GARENNE COLOMBES (FR); CUVILLIER, Christophe, 95310 ST OUEN L'AUMONE (FR); COUPEROT, Hélène, 95300 PONTOISE (FR)
(74) Mandataire: Lavoix

(57) **Abrégé**

La présente invention concerne un procédé de réalisation d'un élément d'habillage (10) de véhicule, l'élément d'habillage (10) comportant une pièce de support (14) sur laquelle est fixée une feuille d'habillage (16).

La feuille d'habillage (16) est constituée d'une partie d'un flanc découpé (28) dans un bloc de matière (24) selon une direction de coupe déterminée, par rapport à une direction principale (A1) du bloc de matière (24). La face externe (20) de la feuille d'habillage (16) est formée dans une face principale (30) du flanc découpé (28). Le bloc de matière (24) est obtenu par pressage à chaud d'une sélection de granulés (22) en matériau thermoplastique de couleurs distinctes.

## Description

La présente invention concerne un procédé de réalisation d'un élément d'habillage pour véhicule.

L'invention concerne aussi un élément d'habillage obtenu par un tel procédé.

Il est connu de réaliser des éléments d'habillage, tels que des panneaux de porte, des planches de bord ou autre, dont la surface externe présente, au moins en partie, un aspect décoratif, par exemple l'aspect du bois, afin d'améliorer les caractéristiques esthétiques de ces éléments d'habillage.

L'élément d'habillage comporte généralement une pièce de support en matériau thermoplastique réalisé par injection dans un moule et une feuille d'habillage, présentant par exemple l'aspect du bois, rapportée sur la pièce de support.

Lorsque la feuille d'habillage est réalisée dans un matériau différent de la pièce de support, cela complique les opérations de recyclage de l'élément d'habillage, lorsque le véhicule qu'elle équipe arrive en fin de vie.

L'un des buts de l'invention est de proposer de nouvelles variantes d'aspect permettant d'améliorer les caractéristiques esthétiques des éléments d'habillage tout en facilitant les opérations de recyclage des éléments d'habillage.

A cet effet, l'invention a pour objet un procédé de réalisation d'un élément d'habillage de véhicule comprenant une face externe prévue pour être visible d'un utilisateur du véhicule, le procédé comprenant les étapes suivantes :
- fourniture d'une sélection de granulés en matériau thermoplastique, les granulés étant de couleurs différentes ;
- formation d'un bloc de matière par pressage à chaud des granulés sélectionnés ;
- refroidissement du bloc de matière ;
- découpage du bloc de matière selon un plan de coupe prédéterminé, par rapport à une direction principale du bloc de matière, de manière à obtenir un flan découpé présentant une face principale parallèle au plan de coupe ;
- formation d'une feuille d'habillage adaptée à la forme de l'élément d'habillage, à partir du flanc découpé, la face externe de la feuille d'habillage étant formée dans la face principale du flanc découpé ;
- fourniture d'une pièce de support prévue pour former l'élément d'habillage ;
- fixation de la feuille d'habillage sur la pièce de support, la face externe de la feuille d'habillage formant au moins une partie de la face externe de l'élément d'habillage.

Un tel procédé de réalisation d'un élément d'habillage permet d'obtenir des aspects très originaux pour la feuille d'habillage tout en permettant une fabrication simple et économique de l'élément d'habillage, sans pénaliser les opérations de recyclage ultérieures.

Les aspects obtenus pour la face externe de la feuille d'habillage renforcent la qualité perçue de l'élément d'habillage pour l'utilisateur final. De plus, le procédé selon l'invention permet une plus une grande liberté de création pour les concepteurs d'éléments d'habillage et les concepteurs des intérieurs de véhicule.

Suivant d'autres aspects avantageux de l'invention, le procédé comprend une ou plusieurs des caractéristiques suivantes, prises isolément ou suivant toutes les combinaisons techniquement possibles :
- la fixation de la feuille d'habillage comprend une étape de collage de la feuille d'habillage sur la pièce de support, notamment par collage à chaud ;
- le collage de la feuille d'habillage sur la pièce support est réalisé par surmoulage avec la pièce de support ou par thermocompression ;
- la sélection de granulés comporte au moins 50% de granulés en matériau thermoplastique recyclé, de préférence 100% de granulés en matériau thermoplastique recyclé ;
- la formation du bloc de matière comporte une étape de stratification permettant de former, dans le bloc de matière, des couches stratifiées de couleurs différentes, orientées globalement parallèlement à la direction principale du bloc de matière, ou perpendiculairement à la direction principale du bloc de matière, de manière que le choix du plan de coupe, par rapport à la direction principale du bloc de matière, détermine des aspects visuels différents pour la face principale du flanc découpé ;
- le plan de coupe est sensiblement perpendiculaire à la direction principale du bloc de matière ;
- le procédé comprend une étape de traitement de la face principale du flanc découpé, ou de la face externe de la feuille d'habillage, par rayonnement ultra-violet ;
- le procédé comprend une étape de dépose d'un revêtement de protection sur la face principale du flanc découpé, ou sur la face externe de la feuille d'habillage, ou sur la face externe de l'élément d'habillage ;
- la formation de la feuille d'habillage à partir du flanc découpé comprend une étape de découpe, notamment une étape de découpe par rayon laser.

L'invention propose aussi un élément d'habillage de véhicule comprenant une face externe prévue pour être visible d'un utilisateur du véhicule, l'élément d'habillage comportant une pièce de support sur laquelle est fixée une feuille d'habillage, caractérisé en ce que la feuille d'habillage est constituée d'une partie d'un flanc découpé dans un bloc de matière selon une direction de coupe déterminée, par rapport à une direction principale du bloc de matière, la face externe de la feuille d'habillage étant formée dans une face principale du flanc découpé, le bloc de matière étant obtenu par pressage à chaud d'une sélection de granulés en matériau thermoplastique de couleurs distinctes.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue schématique en perspective qui représente un élément d'habillage conforme aux enseignements de l'invention ;
[Fig. 2] la figure 2 est un schéma qui illustre différentes étape d'un procédé de réalisation de l'élément d'habillage de la figure 1 conformément aux enseignements de l'invention.

Dans la suite de la description, des éléments identiques ou similaires seront dans certains cas désignés par les mêmes chiffres de référence.

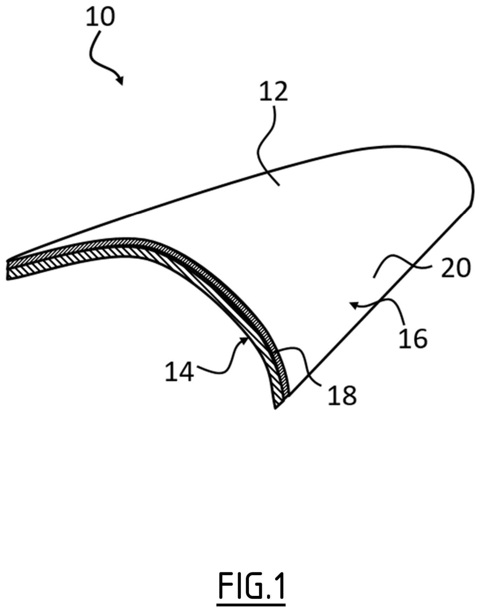

Sur la figure 1, on a représenté schématiquement un élément d'habillage 10 de véhicule comportant une face externe 12 prévue pour être visible d'un utilisateur du véhicule. L'élément d'habillage 10 est prévu pour être agencé par exemple dans un panneau de porte (non représenté) ou sur un tableau de bord (non représenté).

L'élément d'habillage 10 comporte une pièce de support 14, qui forme le corps principal de l'élément d'habillage 10, et une feuille d'habillage 16 qui recouvre la pièce de support 14.

Selon le mode de réalisation représenté, la feuille d'habillage 16 recouvre la totalité de la face supérieure 18 de la pièce de support 14. La face externe 12 de l'élément d'habillage 10 est ainsi formée par la face externe 20 de la feuille d'habillage 16.

Bien entendu, selon une variante de réalisation (non représentée), la feuille d'habillage 16 peut ne recouvrir qu'une partie de la pièce de support 14. Dans ce cas, la face externe 12 de l'élément d'habillage 10 est formée en partie par la face externe 20 de la feuille d'habillage 16 et par une partie de la face supérieure 18 de la pièce de support 14.

On note que l'élément d'habillage 10 présente de préférence une forme relativement complexe, non plane, ce qui crée des contraintes particulières pour sa réalisation.

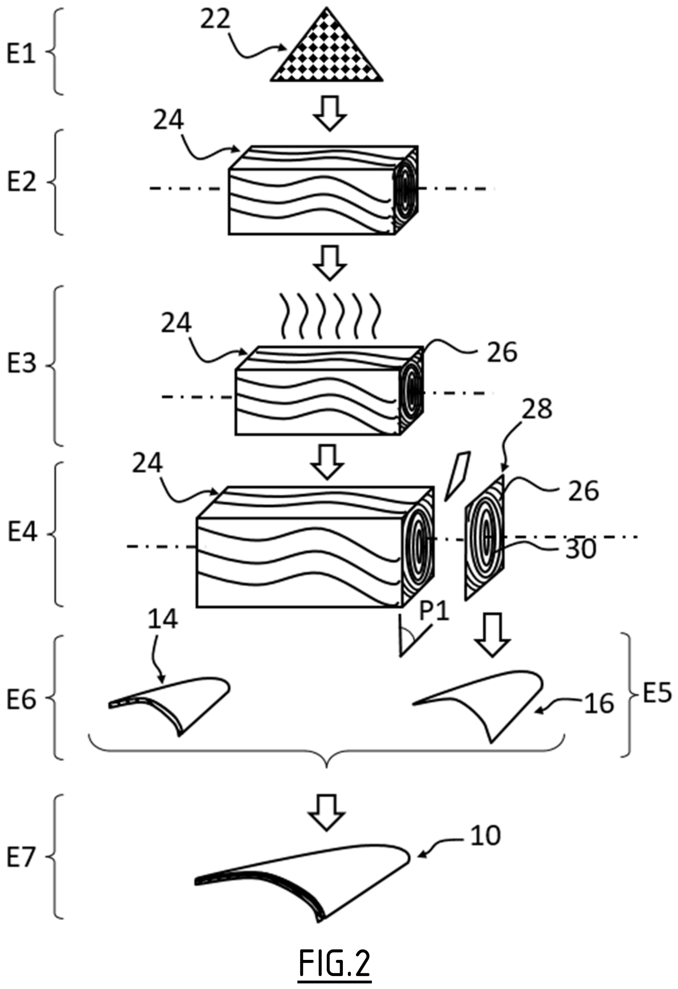

On décrit maintenant un procédé de réalisation de l'élément d'habillage 10 de la figure 1, conformément aux enseignements de l'invention, en considérant notamment la figure 2.

Une première étape E1 du procédé comprend la fourniture d'une sélection de granulés 22 en matériau thermoplastique. Les granulés 22 sont de préférence de couleurs différentes, ce qui permet d'obtenir des effets visuels intéressants sur la face externe 20 de la feuille d'habillage 16, comme on le verra par la suite.

De plus, les granulés 22 sont, de préférence, des granulés issus de matériau thermoplastique recyclé. Avantageusement, au moins 50% des granulés 22 sont constitués de matériau thermoplastique recyclé. De préférence 100% des granulés 22 sont constitués de matériau thermoplastique recyclé.

Les granulés 22 proviennent par exemple de matériaux post-industriels (matériaux PIR), c'est-à-dire des matériaux détournés du flux de déchets au cours d'un processus de fabrication, ou de matériaux de post-consommation (matériaux PCR), c'est-à-dire des matériaux issus de déchets produits par des utilisateurs finaux, par exemple des emballages qui ne peuvent plus être utilisés pour l'usage auquel ils étaient destinés.

Le terme de granulés s'étend ici à tout type de morceaux ou fragments de matériau thermoplastique, notamment des grains, des « chips » de polymères issues du recyclage de pièces en thermoplastique, des fragments de fils ou de textiles, dans la mesure où ils ont une composition chimique homogène permettant de les fondre pour constituer un bloc de matière homogène. Les granulés 22 peuvent donc prendre la forme de tronçons cylindriques, ou de grains, ou de « chips », ou autres particules de petite taille comparativement à la feuille d'habillage 16.

Une seconde étape E2 comprend la formation d'un bloc de matière 24, par exemple de forme parallélépipédique, comme illustré sur la figure 2, par une opération de pressage à chaud des granulés 22 sélectionnés à la première étape E1 dans une cavité ou un moule.

Les granulés 22 sont par exemple chauffés jusqu'à une température de fusion et mélangés avec un liant comportant par exemple une colle.

Le bloc de matière 24 peut aussi être réalisé sans colle, uniquement en chauffant les granulés 22 jusqu'à la température de fusion.

Alternativement, le bloc de matière 24 peut être réalisé par chauffage des granulés 22 jusqu'à une température minimum de ramollissement, dite « glass temperature », par mélange avec un liant réactivable par la température de chauffe.

Les granulés 22 peuvent aussi être introduits dans un extrudeur pour être chauffés, mélangés, et ensuite déposés dans une cavité de forme parallélépipédique.

On peut également ajouter un colorant dans l'extrudeur qui va plus ou moins se disperser en fonction du pouvoir malaxant de la vis de cet extrudeur.

On peut également avoir plusieurs robots extrudeurs qui viennent déposer deux ou plusieurs matériaux différents dans une cavité, ou un moule, avant de procéder à une opération de pressage. Les robots extrudeurs peuvent produire des effets aléatoires dans l'aspect visuel du matériau qui sera découpé, notamment des lignes, des courbes, ou des tourbillons.

Avantageusement, la formation du bloc de matière 24 comprend une étape de stratification qui permet de former, dans le bloc de matière 24, des couches stratifiées 26 de couleurs différentes.

Selon l'exemple représenté, la stratification peut être obtenue par exemple en remuant le mélange de granulés 22 autour d'un axe principal longitudinal A1, au cours d'une opération de chauffage qui provoque la fonte des granulés 22. Le mélange est par exemple remué en imprimant un mouvement rotatif centré sur l'axe principal longitudinal A1.

On définit ici comme direction principale A1 du bloc de matière 24 l'axe principal longitudinal A1 mentionné ci-dessus.

Cette phase de mélange permet ici d'obtenir des couches stratifiées 26 orientées globalement parallèlement à la direction principale A1 du bloc de matière 24, comme illustré schématiquement sur la figure 2.

Selon une variante de réalisation (non représentée), la phase de mélange peut être mise en œuvre de manière que les couches stratifiées 26 soient perpendiculaires ou inclinées par rapport à la direction principale A1 du bloc de matière 24.

Après la formation du bloc de matière 24, une troisième étape E3 comprend le refroidissement du bloc de matière 24 jusqu'à ce qu'il atteigne la température ambiante.

Une quatrième étape E4 comprend le découpage du bloc de matière 24 selon un plan de coupe P1, par rapport à la direction principale A1 du bloc de matière 24, de manière à obtenir un flan découpé 28 présentant une face principale 30 parallèle au plan de coupe P1.

Avantageusement, le flanc découpé 28 est de faible épaisseur, de préférence une épaisseur inférieure à 1 mm.

L'orientation du plan de coupe P1 est sélectionné en fonction de l'effet visuel recherché pour la face principale 30.

Selon le mode de réalisation représenté ici, le plan de coupe P1 est perpendiculaire à la direction principale A1, ce qui permet de faire apparaître les couches stratifiées 26 en section sur la face principale 30 du flanc découpé 28.

Selon une variante de réalisation (non représentée), le plan de coupe P1 peut être parallèle ou légèrement incliné par rapport à la direction principale A1, ce qui permet de faire apparaître les couches stratifiées 26 à la manière de veines sur la face principale 30 du flanc découpé 28.

Les couches stratifiées 26 peuvent être irrégulières ce qui permet de fournir des aspects visuels encore différents pour la face principale 30 du flanc découpé 28.

Selon une autre variante de réalisation (non représentée), le bloc de matière 24 peut être formé de manière que les granulés 22 soient dispersés de manière aléatoire dans la masse du bloc de matière 24. Ceci permet de produire un effet visuel du type « moucheté » sur la face principale 30 du flanc découpé 28, quel que soit l'orientation du plan de coupe P1.

Une cinquième étape E5 comprend la formation de la feuille d'habillage 16, à partir du flanc découpé 28, pour qu'elle soit apte à être déposée sur la pièce de support 14.

La feuille d'habillage 16 peut être découpée, par exemple par découpe laser, de manière à pouvoir être conformée à la forme complexe de la face supérieure 18 de la pièce de support 14, et de manière que la face externe 20 de la feuille d'habillage 16 soit formée dans la face principale 30 du flanc découpé 28.

La feuille d'habillage 16 peut être mise en forme à ce stade à la forme de la face supérieure 18 de la pièce de support 14 par exemple en utilisant un procédé de fabrication mettant en œuvre la modélisation directe des informations de construction, ou Building Information Modeling (BIM) selon la terminologie anglaise.

Selon une variante de réalisation, la feuille d'habillage 16 est mise en forme par thermocompression directement sur la face supérieure 18 de la pièce de support 14.

En parallèle, une sixième étape E6 comprend la fourniture de la pièce de support 14.

La pièce de support 14 est par exemple réalisée par injection dans un moule d'un matériau thermoplastique. Ce matériau peut comporter au moins une part de matériau thermoplastique recyclé.

De préférence, la pièce de support 14 et la feuille d'habillage 16 sont réalisés dans le même matériau ce qui facilite le recyclage des matériaux utilisés dans le véhicule à la fin du cycle de vie du véhicule.

Une septième étape E7 comprend la fixation de la feuille d'habillage 16 sur la pièce de support 14.

La fixation de la feuille d'habillage 16 est de préférence réalisée par collage à chaud sur la pièce de support 14, soit par surmoulage avec la pièce de support 14, soit par thermocompression sur la pièce de support 14.

Ce processus de fixation par collage permet d'obtenir une fusion du matériau thermoplastique à l'interface entre la pièce de support 14 et la feuille d'habillage 16, et former ainsi une pièce complète formant l'élément d'habillage 10.

De manière optionnelle, le procédé peut comporter une étape de traitement par rayonnement ultra-violet. Cette étape de traitement peut être mise en œuvre sur la face principale 30 du flanc découpé 28, avant découpage pour former la feuille d'habillage 16.

Selon une variante de réalisation, cette étape de traitement est mise en œuvre sur la face externe 20 de la feuille d'habillage 16, après découpage et avant mise en forme, ou après collage sur la pièce de support 14.

De manière optionnelle, le procédé peut comporter une étape de dépose d'un revêtement de protection tel qu'un verni. Cette étape de dépose peut être mise en œuvre sur la face principale 30 du flanc découpé 28, avant découpage pour former la feuille d'habillage 16.

Selon une variante de réalisation, cette étape de dépose est mise œuvre la face externe 20 de la feuille d'habillage 16, après découpage et avant mise en forme, ou après collage sur la pièce de support 14.

Le procédé selon l'invention permet ainsi de réaliser un élément d'habillage 10 qui comporte un habillage présentant un effet tranché, à la manière d'une pierre naturelle tranchée, par exemple à la manière du marbre.

Par rapport à la richesse des effets visuels obtenus, le coût de fabrication est relativement modique puisqu'il est possible de réaliser plusieurs feuilles d'habillage 16 dans un même flanc découpé 28, ou de grandes feuilles d'habillage 16 dans un seul flanc découpé 28.

Il est possible d'adapter la forme du bloc de matière 24 en fonction de la taille des flancs découpés 28 nécessaires aux éléments d'habillage 10 que l'on souhaite habiller.

L'élément d'habillage 10 obtenu par le procédé selon l'invention présente des avantages en matière de recyclabilité puisque le procédé permet de réaliser tout l'élément d'habillage dans un seul et même matériau thermoplastique.

Le procédé selon l'invention permet de maîtriser facilement le type d'effet visuel que l'on souhaite obtenir sur l'élément d'habillage 10. L'industrialisation de ce procédé est relativement aisée et permet de réaliser un grand nombre de pièces, avec une qualité d'aspect stable et contrôlée.

On note que le procédé selon l'invention peut permettre de réaliser une feuille d'habillage 16 suffisamment fine et translucide pour permettre d'intégrer un dispositif de rétroéclairage dans la pièce de support 14, sous la feuille d'habillage 16.

## Revendications

1. Procédé de réalisation d'un élément d'habillage (10) de véhicule comprenant une face externe (12) prévue pour être visible d'un utilisateur du véhicule, le procédé comprenant les étapes suivantes :
- fourniture d'une sélection de granulés (22) en matériau thermoplastique, les granulés (22) étant de couleurs différentes ;
- formation d'un bloc de matière (24) par pressage à chaud des granulés (22) sélectionnés ;
- refroidissement du bloc de matière (24) ;
- découpage du bloc de matière (24) selon un plan de coupe (P1) prédéterminé, par rapport à une direction principale (A1) du bloc de matière (24), de manière à obtenir un flan découpé (28) présentant une face principale (30) parallèle au plan de coupe (P1) ;
- formation d'une feuille d'habillage (16) adaptée à la forme de l'élément d'habillage (10), à partir du flanc découpé (28), la face externe (20) de la feuille d'habillage (16) étant formée dans la face principale (30) du flanc découpé (28) ;
- fourniture d'une pièce de support (14) prévue pour former l'élément d'habillage (10) ;
- fixation de la feuille d'habillage (16) sur la pièce de support (14), la face externe (20) de la feuille d'habillage (16) formant au moins une partie de la face externe (12) de l'élément d'habillage (10).

2. Procédé selon la revendication précédente, **caractérisé en ce que** la fixation de la feuille d'habillage (16) comprend une étape de collage de la feuille d'habillage (16) sur la pièce de support (14), notamment par collage à chaud.

3. Procédé selon la revendication précédente; **caractérisé en ce que** le collage de la feuille d'habillage (16) sur la pièce support (14) est réalisé par surmoulage avec la pièce de support (14) ou par thermocompression.

4. Procédé selon l'une quelconque des revendications précédentes, **caractérisé en ce que** la sélection de granulés (22) comporte au moins 50% de granulés (22) en matériau thermoplastique recyclé, de préférence 100% de granulés (22) en matériau thermoplastique recyclé.

5. Procédé selon l'une quelconque des revendications précédentes, **caractérisé en ce que** la formation du bloc de matière (24) comporte une étape de stratification permettant de former, dans le bloc de matière (24), des couches stratifiées (26) de couleurs différentes, orientées globalement parallèlement à la direction principale (A1) du bloc de matière (24), ou perpendiculairement à la direction principale (A1) du bloc de matière (24), de manière que le choix du plan de coupe (P1), par rapport à la direction principale (A1) du bloc de matière (24), détermine des aspects visuels différents pour la face principale (30) du flanc découpé (28).

6. Procédé selon l'une quelconque des revendications précédentes, **caractérisé en ce que** le plan de coupe (P1) est sensiblement perpendiculaire à la direction principale (A1) du bloc de matière (24).

7. Procédé selon l'une quelconque des revendications précédentes, **caractérisé en ce qu'**il comprend une étape de traitement de la face principale (30) du flanc découpé (28), ou de la face externe (20) de la feuille d'habillage (16), par rayonnement ultra-violet.

8. Procédé selon l'une quelconque des revendications précédentes, **caractérisé en ce qu'**il comprend une étape de dépose d'un revêtement de protection sur la face principale (30) du flanc découpé (28), ou sur la face externe (20) de la feuille d'habillage (16), ou sur la face externe (12) de l'élément d'habillage (10).

9. Procédé selon l'une quelconque des revendications précédentes, **caractérisé en ce que** la formation de la feuille d'habillage (16) à partir du flanc découpé (28) comprend une étape de découpe, notamment une étape de découpe par rayon laser.

10. Élément d'habillage (10) de véhicule comprenant une face externe (12) prévue pour être visible d'un utilisateur du véhicule, l'élément d'habillage (10) comportant une pièce de support (14) sur laquelle est fixée une feuille d'habillage (16), **caractérisé en ce que** la feuille d'habillage (16) est constituée d'une partie d'un flanc découpé (28) dans un bloc de matière (24) selon une direction de coupe déterminée, par rapport à une direction principale (A1) du bloc de matière (24), la face externe (20) de la feuille d'habillage (16) étant formée dans une face principale (30) du flanc découpé (28), le bloc de matière (24) étant obtenu par pressage à chaud d'une sélection de granulés (22) en matériau thermoplastique de couleurs distinctes.
